# EUROPEAN PATENT APPLICATION

(11) **EP 4 253 781 A1**
(43) Date of publication of application: **04.10.2023**
(21) Application number: 22382304.8
(22) Date of filing: 30.03.2022
(51) Int. Cl.: F16D 1/033, F16D 1/12

(54) **COUPLING ASSEMBLY**

(71) Applicant: Siemens Gamesa Renewable Energy Innovation & Technology S.L., 31621 Sarriguren (Navarra) (ES)
(72) Inventor: Redin, Juan, San Jose 95121 (US); Salvatierra Macua, Carlos Jesus, 31191 Beriain (ES)
(74) Representative: SGRE-Association

(57) **Abstract**

A torque transmitting coupling assembly (1) for a wind turbine (40) configured to couple a first coupling part (2) to a second coupling part (3), wherein the first coupling part (2) and the second coupling part (3) are configured to rotate about a longitudinal axis (42) of the torque transmitting coupling assembly (1), wherein the first coupling part (2) is supported by a first bearing (48) and a second bearing (49) distributed along the longitudinal axis (42), wherein the first coupling part (2) is enclosed by a bearing housing (13) and the first and second bearings (48, 49) are arranged between the first coupling part (2) and the bearing housing (13), wherein the second coupling part (3) is enclosed by a second coupling part housing, wherein the first coupling part (2) and the second coupling part (3) are rigidly coupled by a plurality of fastening means (6).

## Description

The present invention relates to a torque transmitting coupling assembly for a wind turbine configured to couple a first coupling part to a second coupling part. The present invention further relates to a drive train of a wind turbine.

Wind turbines are increasingly used for the generation of electrical energy. A wind turbine comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

The drivetrain of a wind turbine comprises shaft-to-shaft or hub-to-shaft couplings to couple the components of the drivetrain. For example, the main shaft of the drivetrain between the main bearing and the gearbox is coupled to the gearbox input shaft or to the planet carrier of the gearbox to transfer the torque from the main shaft to the gearbox. The coupling has to be suitable to transfer the torques of the drivetrain of the wind turbine and not all couplings known from the prior art, such as in the automotive sector, are suited for transferring the torques generated by a wind turbine.

Different shaft-to-shaft or hub-to-shaft couplings are known from the prior art. For example, a shrink disk can be used for solid shaft arrangements. Alternatively, a bolted joint with friction shim can be used for the coupling. The use of a friction shim reduces the risk of slippage of the coupling members, as the friction shim increases the coefficient of static friction between the two coupled parts. For example, a coated steel shim with partially embedded diamonds can be used as a friction shim. The friction shim is then placed between the two coupling members of the shaft-to-shaft or hub-to-shaft couplings and the diamonds press into the surface of the coupling members to create a microform fit, which leads to a significant friction increase between the coupling members. The use of friction shims allows to transfer higher torques with less slippage risk and is a compact solution, however it is very expensive due to the materials used. Friction shims are used in the automotive sector to couple shafts of the drivetrain. However, the use of friction shims in wind turbines is very expensive, as the shafts have a much larger diameter and transferred torque compared to the automotive sector. Additionally, friction shims are limited to transmit torque beyond a certain torque density limit. Additionally, the disassembly of friction shims is difficult due to the microform fits. Alternatively, other frictional couplings such as clamping sets can be used, but their assembly and disassembly are difficult as well.

Torque transmitting couplings for wind turbines are known from the prior art as well. Document US 2019/0048938 A1 discloses a torque transmitting coupling between two rotatable parts by means of a form-fitted coupling between the two rotatable parts and a compression ring which presses the two rotatable parts together. However, for this coupling, the second rotatable part is arranged at an outer circumferential surface of the first rotatable part. Hence, the second rotatable part is overconstrained so that the first rotatable part fits inside the second rotatable part at the coupling region. Additionally, the torque transmitting region of the coupling is limited by the overlapping surface of both rotatable parts.

The current development of the technology of wind turbines tends to an increased size of wind turbines for harvesting more wind energy, with longer blades and higher towers. Due to the increasing size of wind turbines and the higher loads generated by the wind turbines, higher torques are being transmitted by shafts and couplings in the drivetrain and shafts with a wider diameter are used.

Overconstrained coupling members for the torque transmitting coupling as disclosed in document US 2019/0048938 A1 is disadvantageous due to the increasing size of the drivetrain of newly developed wind turbines. The coupling technique of the drivetrain parts should not present a limiting factor in the dimensioning of the drivetrain components. In other words, the coupling should be adapted so as to present a compact solution to couple shafts or a shaft to a hub without having to modify the dimensions of the coupling members.

A problem of overconstrained coupling members is that misalignments occurring during the rotation of the parts of the coupling assembly result in deformation and shear, as the system is restrained without any degree of freedom left for counteracting against these misalignments, which might result from vibrations in the system or from acceleration or deceleration of the rotating parts. Such deformations can lead to a total failure of the coupling assembly and shorter lifetime of the components.

For coupling assemblies used in wind turbines, one of the mayor design restrictions to an onshore wind turbine comes from the transport, hoisting and logistic limitations on the inland scenario. One of the most restrictive aspects of this frame is the width of the nacelle-limited transportation restrictions, as well as the height.

As the power output of a wind turbine grows, following the market's demands, the gearbox grows with it. The size of the first stage of the gearbox and its ratio is key to a healthy design and it is limited by the width constrain of the nacelle. The gearbox is centered and aligned with the main shaft arrangement on its first stage and this fact constrains passage to an equal value on each side of the gearbox.

It is an object of the invention to provide a torque transmitting coupling assembly which overcomes the problems known form the prior art.

In addition, the object of the invention is to provide a classic 4-point drive train of a wind turbine in which the input torque that comes from the rotor and is transferred onto the gearbox, for its transformation to a higher speed, is reacted onto the main structure of the wind turbine.

This is achieved by a torque transmitting coupling assembly according to claim 1 and a drive train according to claim 15.

According to the invention, a torque transmitting coupling assembly for a wind turbine comprises a first coupling part and a second coupling part, wherein said torque transmitting coupling assembly is configured to couple the first coupling part to the second coupling part. The first coupling part and the second coupling part are therefore rotatable parts, such as a hub or a shaft.

According to the invention, the first coupling part and the second coupling part are configured to rotate about a longitudinal axis of the torque transmitting coupling assembly. For example, if the first coupling part and the second coupling part are shafts, both shafts rotate about the longitudinal axis of the torque transmitting coupling assembly, which is the longitudinal axis of both shafts as well.

According to the invention, the first coupling part is supported by a first bearing and a second bearing distributed along the longitudinal axis, wherein the first coupling part is enclosed by a bearing housing and the first and second bearings are arranged between the first coupling part and the bearing housing.

The first and second bearing may be distributed along the longitudinal axis to support the rotation of the first coupling part.

According to the invention, the second coupling part is enclosed by a second coupling part housing. The second coupling part housing may support the second coupling part components as well as protect the components housed inside.

According to the invention, the first coupling part and the second coupling part are rigidly coupled by a plurality of fastening means. The rigid coupling prevents misalignments after the coupling which might result from the rotation of both the first and the second coupling part, so that the torque can be efficiently transmitted from the first coupling part to the second coupling part.

According to the invention, the bearing housing is coupled to the second coupling part housing by a plurality of coupling flanges, wherein each coupling flange is coupled to the bearing housing by a resilient means. Resilient means are means which generate a force between the components coupled by the resilient means depending on the relative position of the components to each other and which have a neutral position at which no force is exerted between the components. The purpose of this coupling is to have a flexible coupling and thereby being able to react to transversal displacements of the second coupling part housing to the bearing housing by providing an additional degree of freedom for the torque transmitting coupling assembly.

The flexible coupling is a reaction mechanism which mitigates the reaction torque caused by acceleration and deceleration of the rotating parts of the torque transmitting coupling assembly by avoiding uncontrolled and undesired transversal displace of the structure of the torque transmitting coupling assembly, in particular of the structure of the bearing housing and of the second coupling part housing. The flexible coupling is configured to react the torque in a tamed and dampened manner, so that the internal and external components of the coupling assembly receive a manageable load transfer.

Hence, the coupling flanges can be seen as reaction torque arms configured to mitigate the reaction forces of the torque transmitting coupling assembly. The reaction is split on the peripherical part of the torque transmitting coupling assembly, thereby reducing parasitic loads to a negligible level.

According to a preferred embodiment of the invention, the bearing housing comprises a yoke for each coupling flange for coupling the coupling flange to the bearing housing. The yoke may protrude from the outer surface of the bearing housing for easing the coupling with the coupling flanges.

According to another preferred embodiment of the invention, the resilient means is a spring, such as a belleville washer, a coil spring or a disc. Preferably, the springs are rubber springs.

According to another preferred embodiment of the invention, the resilient means comprises an elastomer. Elastomers are well known resilient means.

According to another preferred embodiment of the invention, the resilient means comprises steel.

According to another preferred embodiment of the invention, the resilient means comprises a plurality of springs.

According to another preferred embodiment of the invention, each coupling flange is surrounded at least partially by the respective yoke, wherein the resilient means are arranged at two opposing sides of each coupling flange. For this, the yoke may comprise two yoke flanges extending in radial direction for surrounding the coupling flanges. Hence, both yoke flanges protrude radially outwards from the longitudinal axis, thereby surrounding partially or entirely the respective coupling flange. The resilient means are then arranged at a specific radial distance from the longitudinal axis on both sides of the coupling flange directly facing the yoke flanges. It is also possible to add a third resilient means on the outer radial surface of the coupling flange if the yoke flanges completely surround the coupling flange.

According to another preferred embodiment of the invention, the yokes are formed as an integral part of the bearing housing, which means that the yoke and the bearing housing are formed as a single body. An integral connection can be achieved with permanent joining methods such as welding, which permanently join the surfaces of individual components together to create a single component which cannot be separated into the original individual components without considerable damage. An integral connection can also be achieved during the production of the bearing housing. In this case, the mold comprises both the shape of the bearing housing as well as the shape of the yoke.

Alternatively, the yoke can be a separate part of the bearing housing. In this case, the yoke is releasably connected to the bearing housing by a semi-permanent joining method, such as bolts, rivets, screws or other known joining methods. For example, the yoke can be mounted on the bearing housing by a nut-bolt connection.

According to another preferred embodiment of the invention, the fastening means is a bolt, screw, pin, rivet, thread or stud. Hence, the first coupling part and the second coupling part of the coupling assembly can be coupled by a bolt, screw, pin, rivet, thread, stud or other longitudinal fastener used for fastening.

According to another preferred embodiment of the invention, the torque transmitting coupling assembly is arranged at a drive train of the wind turbine.

According to another preferred embodiment of the invention, the first coupling part is the main shaft of a main bearing of the drive train.

According to another preferred embodiment of the invention, the second coupling part is the gearbox input shaft of a gearbox of the drive train and the second coupling part housing is the gearbox housing.

According to another preferred embodiment of the invention, the bearing housing is rigidly mounted on a bed frame of a nacelle of the wind turbine.

According to another preferred embodiment of the invention, the first bearing is fitted in a first seat at the bearing housing and the second bearing is fitted in a second seat at the bearing housing.

According to another preferred embodiment of the invention, the first bearing is fitted in a third seat at the first coupling part and the second bearing is fitted in a fourth seat at the first coupling part.

According to another preferred embodiment of the invention, the first and second bearings are roller bearings comprising a plurality of rolling elements.

According to another aspect of the invention, the drive train of a wind turbine comprises a main bearing and a gearbox, wherein the main bearing and the gearbox are coupled by means of a torque transmitting coupling assembly.

According to another preferred embodiment of the invention, the gearbox housing comprises two coupling flanges suspended onto four resilient means for mitigating and damping the displacements of the gearbox. In this embodiment, each coupling flange is surrounded at least partially by the respective yoke, wherein the resilient means are arranged at two opposing sides of each coupling flange. Preferably, the four resilient means are four rubber springs.

This embodiment is particularly useful for current state of the art design of drive trains, as the current design does not allow for any lateral growth of the drive train due to the difficulties in transporting and hoisting the nacelle, which increases in size when the drive train grows laterally. In a preferred embodiment, the two coupling flanges are arranged at the upper and lower part of the gearbox housing respectively, so that the drivetrain only grows in height but not laterally, thereby allowing a more compact drivetrain and a smaller nacelle while at the same time being able to transfer higher loads with the drive train.

In order to facilitate the understanding of the characteristics of the invention and being an integral part of this specification, some drawing sheets are attached on which figures, with an illustrative but not limiting character, the following is represented:
Figure 1 shows a perspective view of a wind turbine
Figure 2 shows a drive train inside a nacelle
Figure 3 shows a cross-sectional view of a part of the drive train
Figure 4 shows a perspective view of the drive train shown in Figure 3
Figure 5 shows a cross-sectional view of the coupling interface between the first coupling part and the second coupling part
Figure 6 shows a perspective view of the flexible coupling of the torque transmitting coupling assembly

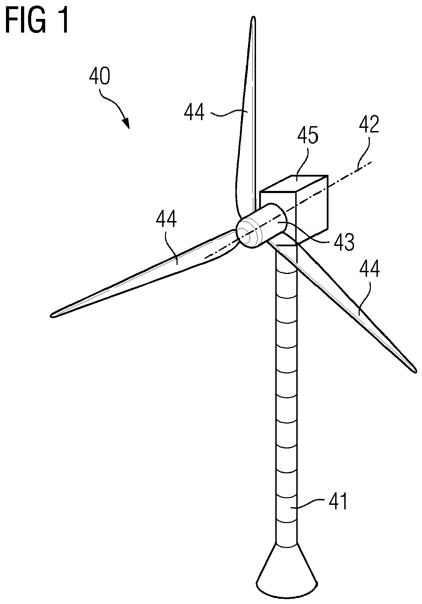

Figure 1 shows a wind turbine 40. The wind turbine 40 comprises a hub 43 connected to a generator (not shown) arranged inside a nacelle 45. The hub 43 comprises three wind turbine blades 44. The nacelle 45 is arranged at an upper end of a tower 41 comprising multiple tower sections. A longitudinal axis 42 passing through the nacelle 45 and the hub 43 is shown as a broken line.

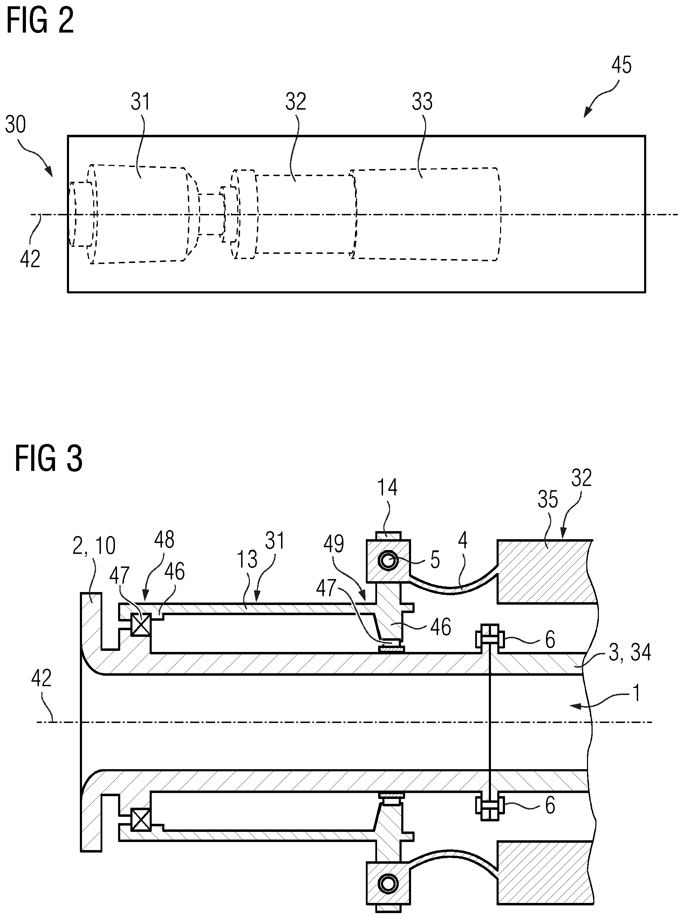

Figure 2 shows a drive train 30 inside a nacelle 45. There are two main types of wind turbines 40, the ones with a gearbox 32 and direct drive gearless wind turbines 40. Here, a drive train 30 comprising a gearbox 32 is shown, but drive trains 30 without a gearbox 32 for direct drive gearless wind turbines 40 are also suitable for the invention.

The drive train 30 comprises a main bearing 31, a gearbox 32 and a generator 33 arranged along the longitudinal axis 42 passing through the nacelle 45.

Figure 3 shows parts of the drive train 30 including the main shaft 10, which is the first coupling part 2 of the torque transmitting coupling assembly 1, and the gearbox input shaft 34, which is the second coupling part 3 of the torque transmitting coupling assembly 1.

The longitudinal axis 42 is the rotational axis of the main shaft 10 and the gearbox input shaft 34, which is also the rotational axis of the rotor, to which the blades 44 are coupled.

The main shaft 10 is at a first end, i.e. at the left of Fig. 3, provided with a rotor attachment flange to rigidly connect the main shaft 10 to the hub 43, for example by means of bolts. In other embodiments, the main shaft 10 may be coupled to the hub 43 by a hirth connection, a combined pin bolt connection, or some other arrangement that ensures the transfer of torque. Furthermore, although the rotor attachment flange is shown as being formed integrally with the rest of the main shaft 10, it may alternatively be a separate component bolted or otherwise secured to the main shaft 10.

At a second end, i.e. at the right of Fig. 3, the main shaft 10 is connected to the gearbox input shaft 34 by a plurality of fastening means 6 so that the main bearing 31 is coupled to the gearbox 32. Hence, the first coupling part 2 and the second coupling part 3 are rigidly connected to each other by the fastening means 6.

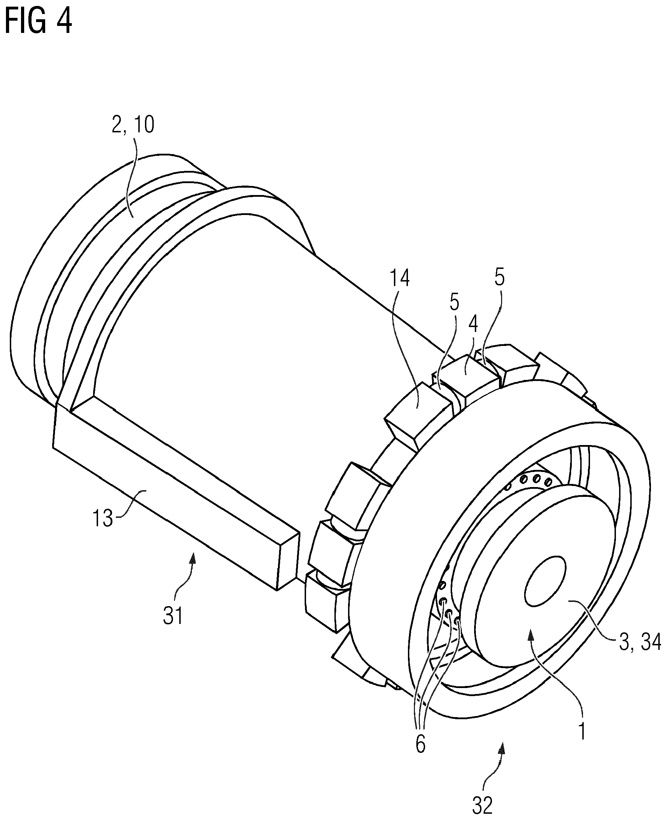

The main shaft 10 is carried via the main bearing 31 and supported by the bearing housing 13. The bearing housing 13 encloses the main shaft 10 and extends substantially in parallel with the longitudinal axis 42. The bearing housing 13 is rigidly mounted on a bed frame of the nacelle structure by means of a flange provided with holes, as can be seen in Figure 4.

The main bearing 31 comprises a first bearing 48 and a second bearing 49 distributed along the longitudinal axis 42 of the main shaft 10 to support the rotation of the main shaft 10 along the longitudinal axis 42. The first and second bearings 48, 49 are in the embodiment shown in Figure 3 roller bearings 46 comprising rolling elements 47, but any of them could alternatively be any other type of bearing, such as a fluid film bearing.

The first bearing 48 is located closer to the hub 43 than the second bearing 49. The first bearing 48, or more specifically, an outer ring of the first bearing 48, is fitted in a first seat at the bearing housing 13. The second bearing 49 is located closer to the gearbox 32 than the first bearing 48. An outer ring of the second bearing 49 is fitted in a second seat at the bearing housing 13. Inner rings of the first and second bearings 48, 49 are fitted in respective seats at the main shaft 10.

The bearing housing 13 is connected to the gearbox housing 35 by a flexible coupling. This flexible coupling surrounds the interface between the main shaft 10 and the gearbox input shaft 34 and comprises a plurality of coupling flanges 4, each of the coupling flanges 4 coupled to a yoke 14 of the bearing housing 13 by a resilient means 5.

Figure 4 shows a perspective view of the drive train 30 shown in Figure 3. As shown in Figure 3, the gearbox housing 35 is coupled by a plurality of coupling flanges 4 to the bearing housing 13.

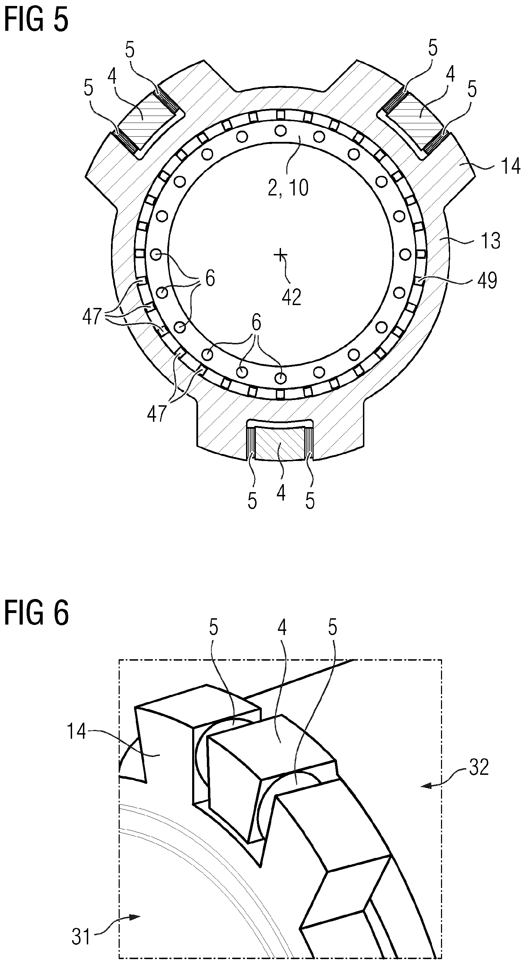

Figure 5 shows a cross-sectional view of the coupling interface between the first coupling part 2 and the second coupling part 3. As can be seen in this figure, each coupling flange 4 is partially surrounded by the respective yoke 14. The resilient means 5 are arranged at two opposing sides of each coupling flange 4 and the coupling flanges 4 are distributed at a radial distance from the longitudinal axis 42.

The yokes 14 are formed as an integral part of the bearing housing 13. The bearing housing 13 is supported by the bearing 49, which is a roller bearing 46 comprising a plurality of rolling elements 47.

In this cross-sectional view, the main shaft 10 can be seen, which is the first coupling part 2 being coupled to the second coupling part 3, which is the gearbox input shaft 34. The main shaft 10 comprises a plurality of fastening means 6 configured as bolts.

Figure 6 shows a perspective view of the flexible coupling of the torque transmitting coupling assembly 1. As seen in Figure 5, each coupling flange 4 is partially surrounded by the respective yoke 14, which comprises two yoke flanges extending in radial direction for surrounding the coupling flanges 4. Resilient means 5 are arranged between each yoke flange and each coupling flange 4.

### Reference numbers

- 1: Torque transmitting coupling assembly
- 2: First coupling part
- 3: Second coupling part
- 4: Coupling flange
- 5: Resilient means
- 6: Fastening means
- 10: Main shaft
- 13: Bearing housing
- 14: Yoke
- 30: Drive train
- 31: Main bearing
- 32: Gearbox
- 33: Generator
- 34: Gearbox input shaft
- 35: Gearbox housing
- 40: Wind turbine
- 41: Tower
- 42: Longitudinal axis
- 43: Hub
- 44: Blade
- 45: Nacelle
- 46: Roller bearing
- 47: Rolling element
- 48: First bearing
- 49: Second bearing

## Claims

1. A torque transmitting coupling assembly (1) for a wind turbine (40) comprising a first coupling part (2) and a second coupling part (3), wherein said torque transmitting coupling assembly (1) is configured to couple the first coupling part (2) to the second coupling part (3),
wherein the first coupling part (2) and the second coupling part (3) are configured to rotate about a longitudinal axis (42) of the torque transmitting coupling assembly (1), wherein the first coupling part (2) is supported by a first bearing (48) and a second bearing (49) distributed along the longitudinal axis (42),
wherein the first coupling part (2) is enclosed by a bearing housing (13) and the first and second bearings (48, 49) are arranged between the first coupling part (2) and the bearing housing (13),
wherein the second coupling part (3) is enclosed by a second coupling part housing,
wherein the first coupling part (2) and the second coupling part (3) are rigidly coupled by a plurality of fastening means (6),
**characterized in that** the bearing housing (13) is coupled to the second coupling part housing by a plurality of coupling flanges (4),
wherein each coupling flange (4) is coupled to the bearing housing (13) by a resilient means (5).

2. The torque transmitting coupling assembly (1) according to claim 1, wherein the bearing housing (13) comprises a yoke (14) for each coupling flange (4) for coupling the coupling flange (4) to the bearing housing (13).

3. The torque transmitting coupling assembly (1) according to claim 1 or 2, wherein the resilient means (5) is a spring, such as a belleville washer, a coil spring or a disc.

4. The torque transmitting coupling assembly (1) according to claim 3, wherein the resilient means (5) comprises a plurality of springs.

5. The torque transmitting coupling assembly (1) according to any of the claims 2 to 4, wherein each coupling flange (4) is surrounded at least partially by the respective yoke (14), wherein the resilient means (5) are arranged at two opposing sides of each coupling flange (4).

6. The torque transmitting coupling assembly (1) according to any of the claims 2 to 5, wherein the yokes (14) are formed as an integral part of the bearing housing (13).

7. The torque transmitting coupling assembly (1) according to any of the preceding claims, wherein the fastening means (6) is a bolt, screw, pin, rivet, thread or stud.

8. The torque transmitting coupling assembly (1) according to any of the preceding claims, wherein said torque transmitting coupling assembly (1) is arranged at a drive train (30) of the wind turbine (40).

9. The torque transmitting coupling assembly (1) according to claim 8, wherein the first coupling part (2) is the main shaft (10) of a main bearing (31) of the drive train (30).

10. The torque transmitting coupling assembly (1) according to claim 8 or 9, wherein the second coupling part (3) is the gearbox input shaft (34) of a gearbox (32) of the drive train (30) and the second coupling part housing is the gearbox housing (35).

11. The torque transmitting coupling assembly (1) according to any of the claims 8 to 10, wherein the bearing housing (13) is rigidly mounted on a bed frame of a nacelle (45) of the wind turbine (40).

12. The torque transmitting coupling assembly (1) according to any of the preceding claims, wherein the first bearing (48) is fitted in a first seat at the bearing housing (13) and the second bearing (49) is fitted in a second seat at the bearing housing (13).

13. The torque transmitting coupling assembly (1) according to any of the preceding claims, wherein the first bearing (48) is fitted in a third seat at the first coupling part (2) and the second bearing (49) is fitted in a fourth seat at the first coupling part (2).

14. The torque transmitting coupling assembly (1) according to any of the preceding claims, wherein the first and second bearings (48, 49) are roller bearings (46) comprising a plurality of rolling elements (47).

15. A drive train (30) of a wind turbine (40) comprising a main bearing (31) and a gearbox (32), wherein the main bearing (31) and the gearbox (32) are coupled by means of a torque transmitting coupling assembly (1) according to claims 1 to 14.
